# EUROPEAN PATENT SPECIFICATION

(11) **EP 3 696 520 B1**
(45) Date of publication and mention of the grant of the patent: **03.04.2024**
(21) Application number: 20156326.9
(22) Date of filing: 10.02.2020
(51) Int. Cl.: G01H 9/00, G01H 1/00

(54) **ULTRASONIC ROTOR DEFLECTION MONITORING SYSTEM**
SYSTEM ZUR ULTRASCHALLÜBERWACHUNG DER ROTORABLENKUNG
SYSTÈME DE SURVEILLANCE DE DÉFLEXION DE ROTOR PAR ULTRASONS

(30) Priority: 13.02.2019 US 201916274683
(43) Date of publication of application: 19.08.2020
(73) Proprietor: LOVEJOY CONTROLS CORPORATION, Waukesha, Wisconsin 53187 (US)
(72) Inventor: Lovejoy, Kim A, Waukesha, Wisconsin 53188 (US)
(74) Representative: Potter Clarkson

(56) References cited:
- WO-A1-2018/038767
- US-A- 2 985 018
- US-A- 4 745 410

## Description

### Background of the Invention

The present invention is directed to rotor deflection probe systems, particularly systems for use with large rotating machinery. Known deflection monitoring sensors for large rotating machinery, eddy-current proximity displacement probes and spring-coil velocity transducers, are hampered with intrinsic errors lessening their effectiveness in providing diagnostic warning or data for balancing and accurate rotor deflection monitoring to determine approaching internal contact between rotating and stationary elements thus protecting against rotor damage during startups. For example, eddy-current proximity displacement probes may suffer from electrical run-out, magnetic run-out, surface irregularity (dents, scratches, and grooves) spiking, and ill-defined calibration. Spring-coil velocity transducers suffer poor low speed outputs, mechanical resonance, and difficulty with coupling to a rotating shaft without use of a contacting shaft rider which itself is spiked by surface irregularities. Further, the probes of prior art systems measure a small surface of the test object. As a result, surface anomalies impact the measurement data.

In an attempt to address the issues, prior art applications have employed Doppler probes. The Doppler Effect presumes the full waveform frequency is not altered. However, it has been found the properties of air are different at short distances. Such that the reflected waveform leading pressure pulse timing is altered. Specifically, where the distance between the probe and the test object is less than 30.5 cm (one foot), the reflected wave in a Doppler application does not have a sinus pattern. Instead, the distance between peak amplitudes at high frequency for the outgoing wave to the test object are not separated enough. As a result, on reflection of the wave from the test object, the sinus wave is irregular. Gains applied to adjust for the irregularity had to be very high. Which caused secondary noise to be at such a high level to make the Doppler measurement ineffective.

Further, prior art probes have employed analog signals. It has been shown that the amplifier gains of a Phase Lock Loop of an analog system to demodulate the Doppler Effect frequency shift would be so great as to pose undesirable thermal noise levels and poor Signal-to-Noise Ratio (SNR). Current electronic components are unable to improve the SNR to a level the application would require.

Further, the prior art seeks to identify a phenomena known as steam whirl instability. Steam-whirl instability in rotating machines can cause a very quick growth of the amplitude of the shaft vibrations that can reach high levels in a very short time. However, improvements in technology have reduced steam-whirl instability to a non-significant factor. As a result, the prior art is not testing the correct factor. The concern is the deflection of the rotor. Deflection normally occurs at the start-up of systems. The rotor experiences sag, or deflection, due to differential heating and expansion during shutdown. Upon start-up, the sag, or deflection, accentuates the natural resonance of the rotors. As a result, at least one of turbine rotor contact with stationary seals and rotating seal contact with stationary lands occurs. As a result, the rotating seals and stationary seals will be damaged. Due to the prior art focus on steam whirl instability, the prior art systems do not test rotor deflection to ensure the turbine rotor contact with stationary seals is minimized and rotating seal contact with stationary lands is minimized. Due to the in ability of the prior art to measure the required parameters, $1 million a year in damage to stationary seals and rotating seals due to the contact between the rotor and the seals.

WO 2018/038767 discloses a system and method for measuring the vibrations of a test object, such as a machine shaft or other rotating equipment, and producing vibration analysis data that is delivered to a host computer. The system includes a probe sensor fitting having an ultrasonic speaker and an ultrasonic microphone. In use, the ultrasonic speaker transmits an ultrasonic signal toward the test object. The transmitted ultrasonic signal is reflected from the test object, and is detected by the ultrasonic microphone. The signal detected by the microphone is sent to a probe analyzer circuit that processes the signal. A microcomputer within said probe analyzer circuit then performs vibration analysis.

US 4,745,410 discloses A device for tow vehicles intended for maneuvering commercial aircraft, where the type of aircraft to be towed is identified and the turn-out angle between the longitudinal axes of the vehicle and the aircraft is determined and monitored during the towing process. The type of aircraft may be ascertained by measuring the width of the nose gear assembly. The turn-out angle can be calculated by measuring the relative distances between opposing sensors on the tow vehicle and the fuselage utilizing a characteristic hull shape of the particular type of aircraft.

US 2,985,018 discloses a device for measuring relatively small displacements and providing a continuous indication of the frequency and amplitude of these displacements. The device utilizes longitudinal, or compression, waves in a liquid or air medium to measure and continuously record small movements of a reflecting surface. The reflecting surface is attached to the object whose movement is to be measured. Sonic or ultrasonic waves are emitted from a transmitting device, passed through an air or liquid medium, are reflected by the reflecting surface and then received by a receiving device. The transmitting and receiving devices are connected to a phase comparison device which combines instantaneously the wave leaving the transmitter and the wave arriving at the receiver to produce an output signal directly proportional to the distance travelled by the waves.

Further, the prior art systems require target calibrations in regards to metallurgy in eddy current proximity probes.

Therefore, there exists a need for a monitoring system testing rotor deflection to ensure the turbine rotor contact with stationary seals is minimized and rotating seal contact with stationary lands is minimized.

There exists a need for a monitoring system testing rotor deflection which measures a large area of the test object minimizing the effect of surface anomalies.

There exists a need for a monitoring system testing rotor deflection system having a design which minimizes thermal noise levels and SNR.

There exists a need for a monitoring system testing rotor deflection system which is self-calibrating.

### Summary of the Invention

The present invention is directed to a system and method for measuring the rotor deflection of a test object, such as a machine shaft or other rotating equipment, and producing real-time deflection analysis.

According to a fist aspect of the present invention, there is provided a system for measuring rotor deflection of a rotor shaft according to claim 1.

The probe sensor may further include a temperature and humidity sensor, wherein the temperature and humidity sensor provide temperature and humidity input corrections that are used for self-calibration of the system. The system may be a digital system. The system may further provide for an incident sound wave having at least one of at least substantially a 25 kHz frequency and at least substantially a 40 kHz frequency. The system may further provide for said incident sound wave having a frequency range from 25 kHz to 40 kHz.

The first digital circuit may be configured to perform probe health diagnostics. In an embodiment, the first digital circuit is configured to transmit the rotor deflection data and a probe health diagnostics data via a serial digital network. In an embodiment the host data manager polls the rotor deflection data and the probe health diagnostics data. In an embodiment, the host data manager polls said rotor deflection data. In an embodiment, the host data manager performs a modal analysis. In an embodiment, system has a zero-phase pulse.

According to a second aspect of the present invention, there is provided a method for measuring a rotor deflection of a rotor shaft according to claim 12.

The method may further include applying corrections from a temperature and humidity sensor to the reflected ultrasonic signal, and performing self-calibration of the system.

The first digital circuit may further perform probe health diagnostics. The method may further include the first digital circuit transmitting a rotor deflection data and a probe health diagnostics data via a serial digital network. The method may further include said host data manager polling the rotor deflection data and the probe health diagnostics data. The method may further include the host data manager polling the deflection analysis. The method may further including the host data manager performing a modal analysis. The method may further include comparing first and second modal deflections. The method may further include producing warnings for the rotor shaft proximity with at least one of stationary lands and stationary seals.

In an embodiment, the system includes a probe/input circuit assembly in communication with a Host Data Manager. The probe/input circuit assembly comprising a probe sensor and input circuit. The probe sensor having an ultrasonic speaker and an ultrasonic microphone.

In use, the ultrasonic speaker transmits an ultrasonic signal toward the test object. The transmitted ultrasonic signal is reflected from the test object, and is detected by the ultrasonic microphone. The signal detected by the microphone is sent to an input circuit that processes the signal. It is observed, the probe targets a surface area of the test object wherein the target surface area of the test object is of a size to minimize effects of anomalies on the test object surface. The minimization of the effect of the anomalies on the test object surface results because the elastic properties of air smooth anomalies in the test object surface within 6.35 mm (¼ - inch) of reflection. A microcomputer within said input circuit then performs deflection analysis. In a first preferred embodiment, the present system uses the reflection of an internally generated, continuous, 25 KHz frequency (ultrasound) incident sound wave to detect the deflection in the test object, rotor. In a second preferred embodiment, the present system uses the reflection of an internally generated, continuous, 40 KHz frequency (ultrasound) incident sound wave to detect the deflection in the test object, rotor. Alternatively, the present system may use the reflection of an internally generated, continuous, incident sound wave within the range of at least substantially 20 KHz to at least substantially 45 KHz frequency (ultrasound) to detect the deflection in the test object, rotor. The current system never disengages from a continuous signal, unlike other designs that routinely pulse a background calibration. Discontinuities in the disengaged signal of other designs can be falsely interpreted as vibration phenomena due to voltage step changes in signal output.

The input circuit comprises the speaker pulse shaper, a microphone pulse shaper, an XOR gate, a second grouping of digital gates, a clock generator, a counter, and a microcomputer. The combination of the speaker pulse shaper, the microphone pulse shaper, the XOR gate, the second grouping of digital gates, the clock generator, and the counter produce a sequence of immediate differential pulse width measurement counts. The pulse width measurement counts are proportional to the instantaneous distance to the test object, rotor. The differential pulse width measurement counts, counting displacement data, is transferred to the microcomputer. Firmware located in the microcomputer performs deflection analysis, and generates probe health diagnostics of the probe.

In addition, the microcomputer is in electrical connection with a bus. Wherein deflection data is communicated to the bus from the microcomputer. The bus, and in turn the input circuit, is in electrical communication with a communication interface module of the Host Data Manager through a serial digital interface network. The communication interface module of the Host Data Manager is in electrical communication with a touch screen PC, industrial computer, of the Host Data Manager through a communications interface module/touch screen PC communication. The serial communications network comprises at least one serial communications port in communication with an RS-485 connection, wherein each at least one serial communications port is in electrical communication with the RS-485 connection through a connection extension. Wherein the serial communications port receives queries from the Host DATA manager and transmits the deflection analysis requested to the Host Data Manager by way of at least one of the connection extension and the RS-485 connection. The data sets from all probes are combined by the communication interface module and sent to the touch screen PC, industrial computer, of the Host Data Manager. The touch screen PC, industrial computer, performs a modal analysis for each test object, rotor, using the deflection data sets of the test object, rotor. The touch screen PC, industrial computer, computes and combines 1st and 2nd modal element sets. The touch screen PC, industrial computer compares the combined 1st and 2nd modal element set of combined deflections to internal seal clearances of the test objects, rotors, at longitudinal locations of finite elements, and provides warning to operators when the deflections are impeding contact with turbine seals of the test object rotor, rotor, at the 100 finite element longitudinal locations along the test object length. Specifically, the system provides warnings to minimize rotor contact with stationary seals and rotating seal contact with stationary lands.

It is observed the system comprises at least one paired assembly. Each paired assembly comprises a primary assembly and a redundant assembly, wherein the primary and secondary assemblies are probe/input circuit assemblies. It is noted the primary assembly and the redundant assembly of each paired assembly is located substantially at the same location along a test object length, and positioned at a different radial location about a circumference of the test object, rotor. In the event that at least one of the probe and microcomputer of the primary assembly fails to respond to the Host Data Manager polling data query or receives a failure notice from the microcomputer, the redundant assembly of the paired assemblies is polled by the Data Host Manager for deflection data.

The touch screen PC, industrial computer, outputs a condensed serial data stream for each probe/input circuit assembly to the Communications Interface Module of the Host Data Manager which maintains a data update with a plant computer or Distributed Control System (DCS) to inform operators.

Further, in each probe/input circuit assembly, the ultrasonic speaker and ultrasonic microphone are located within a housing at a fixed alignment. The present design preferably positions the ultrasonic microphone in exact coincidence with the opposite direction of the reflected ultrasonic waves, usually employing a fixed degree incidence and 30 degree reflection positioning of the ultrasonic speaker (source) and the ultrasonic microphone (receiver). In addition, a buffered, zero-phase pulse provides a timing reference for all time-dependent vibration analysis data such as running speed and half running speed.

As will be discussed, a system according to the present invention further preferably includes a temperature and humidity compensation sensor and an extension tube support, with all components positioned at a fixed distance from a target rotating shaft. The temperature and relative humidity sensor detects and signals the system to compensate for variations in the ambient temperature and relative humidity of the test application. The ambient temperature and relative humidity of the application, for example a turbine monitoring atmosphere, affects the speed of sound by up to 25%. Such changes in the speed of sound directly impact the positional measurements. This arrangement provides for highly accurate gain corrections to the signal from changes in temperature and relative humidity, keeping the sensor system in acceptable calibration at all times. In a first preferred embodiment, the present design preferably utilizes a 25 KHz (+/- 200 Hz) incidence wave frequency. In a second preferred embodiment, the present design preferably utilizes a 40 KHz (+/- 200 Hz) incidence wave frequency. Alternatively, the present system may utilize an incidence wave frequency ranging from 20 KHz (+/- 200 Hz) to 45 KHz (+/-200 Hz).

The microcomputer further generates diagnostic data. Said diagnostic data is sent to the Data Host manager prior to any deflection data to prevent the Data Host Manager from interpreting these events as deflection phenomena in the industrial machine being monitored.

Further configuration can be performed by manually toggling a pair of eight-position Dual in-line Package (DIP) switches which connect to two eight-bit microcomputer ports.

An intended benefit of the present invention is a monitoring system testing rotor deflection to ensure the turbine rotor contact with stationary seals is minimized and rotating seal contact with stationary lands is minimized.

An intended benefit of the present invention is a monitoring system testing rotor deflection which measures a large area of the test object minimizing the effect of surface anomalies.

An intended benefit of the present invention is a monitoring system testing rotor deflection system having a design which minimizes thermal noise levels.

An intended benefit of the present invention is a monitoring system testing rotor deflection system which is self-calibrating.

### Brief Description of the Drawings

Figure 1 is a view illustrating a sensor and input circuit of a system according to the present invention, the sensor positioned to measure deflections of a test object.
Figure 2 is a perspective view of the sensor illustrated in Figure 1.
Figure 3 is a top planar view of the sensor illustrated in Figures 1 and 2.
Figure 4 is an end view of the sensor illustrated in Figures 1 - 3.
Figure 5 is a partial cut away and cross sectional view of the sensor illustrated in Figures 1-4, taken along lines 5 - 5 of Figure 2, and showing an ultrasonic speaker and an ultrasonic microphone.
Figure 6 is a view similar to that of Figure 5, but showing the sensor positioned to measure the deflections of the test object.
Figure 7 is a view similar to that of Figure 6, but showing the sensor measuring the deflections of the test object.
Figure 8 is a block diagram of an input circuit of the system according to the present invention.
Figure 9A is a graphical illustration of a phase offset between a reflected waveform and an incidence waveform, illustrating at least substantially minimal deflection in the test object.
Figure 9B is a graphical illustration of a phase offset between a reflected waveform and an incidence waveform illustrating deflection in the test object in a direction of the sensor.
Figure 9C is a graphical illustration of a phase offset between a reflected waveform and an incidence waveform illustrating deflection in the test object in a direction opposite the sensor.
Figure 10 is a diagram of the system of the present invention applying multiple sensors used in a network for rotor deflection detection.
Figure 11 is a polar vector graphical display identifying a 1^{st} Mode deflection and a 2^{nd} Mode deflection of the test object.
Figure 12 is a graphical illustration of the 1^{st} Mode deflection of the test object.
Figure 13 is a graphical illustration of the 2^{nd} Mode deflection of the test object.
Figure 14 is a graphical illustration of a comparison of combined 1^{st} and 2^{nd} Mode deflections of the test object to internal seal clearances of the test object.

### Description of the Preferred Embodiment

Although the disclosure hereof is detailed and exact to enable those skilled in the art to practice the invention, the physical embodiments herein disclosed merely exemplify the invention which may be embodied in other specific structures. While the preferred embodiment has been described, the scope of the invention is defined by the claims.

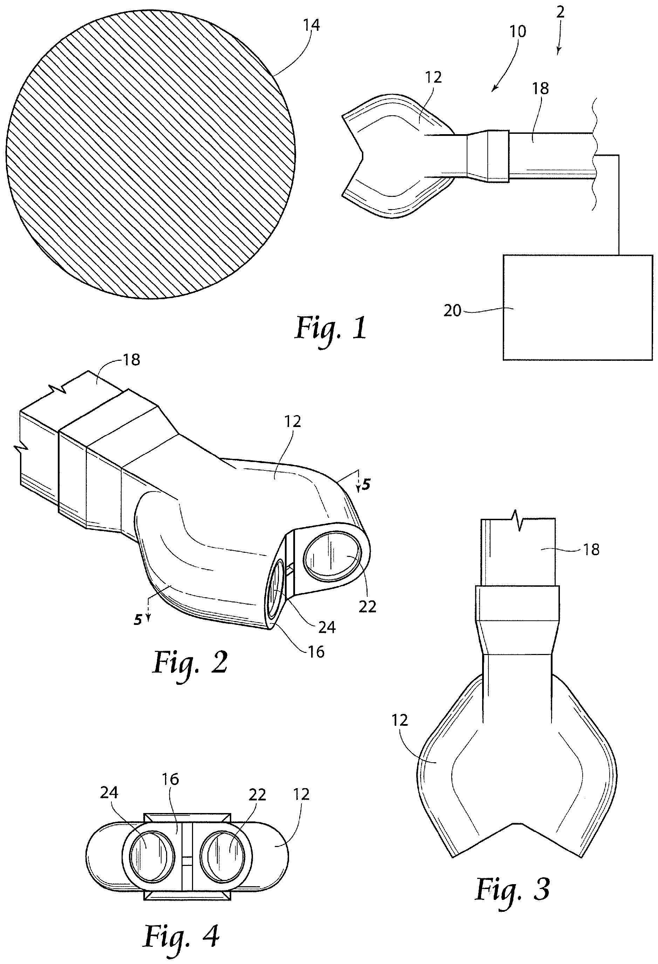

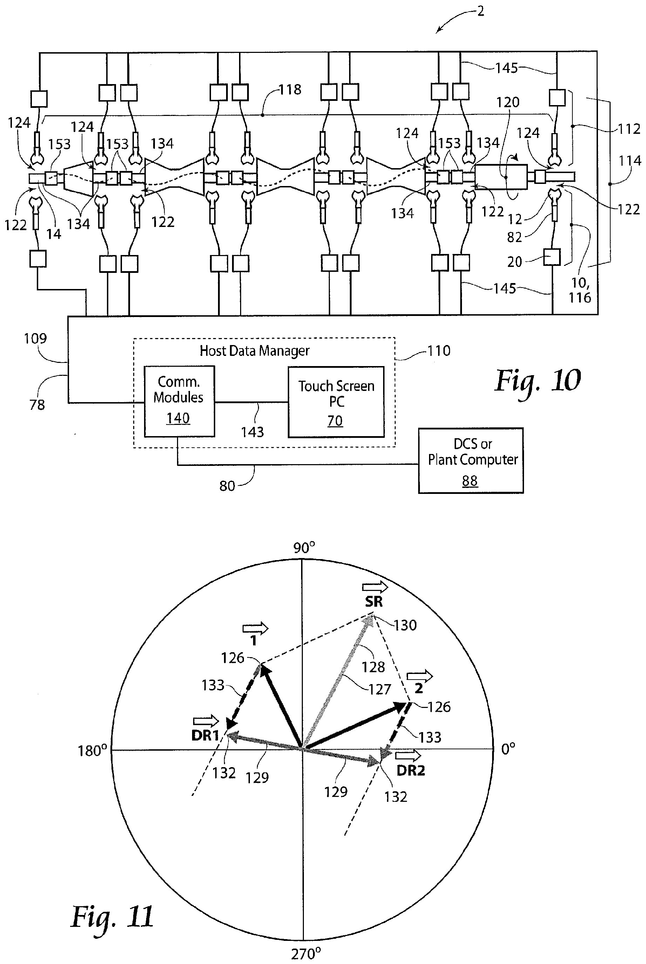

With reference to Figures 1, 2 and 10, a system 2 having at least one probe/input circuit assembly 10, Host Data Manager 110 according to the present invention may be seen. As shown in Figure 10, the system 2 provides a device that is adapted to measure the deflection of a test object, rotor, 14, such as a machine shaft or other rotating object.

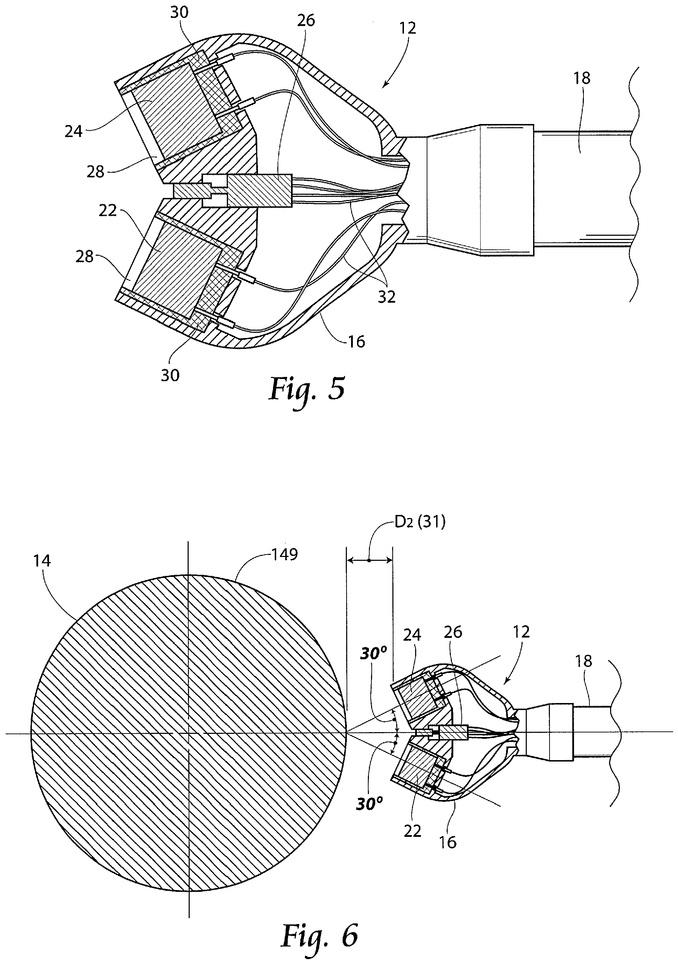

As seen in Figure 1 and 2, the probe/input circuit assembly 10 includes a probe sensor 12 having a housing 16, an extension tube support 18, and a input circuit 20. As seen in Figure 2, a probe sensor 12 for use with the probe/input circuit assembly 10 preferably includes an ultrasonic speaker 22 and an ultrasonic microphone 24. The probe sensor 12 may further include a temperature and relative humidity sensor 26, as will be discussed (see Figure 5). Figures 3 and 4 illustrate top and end views, respectively, of the probe sensor 12 shown in Figures 1 and 2.

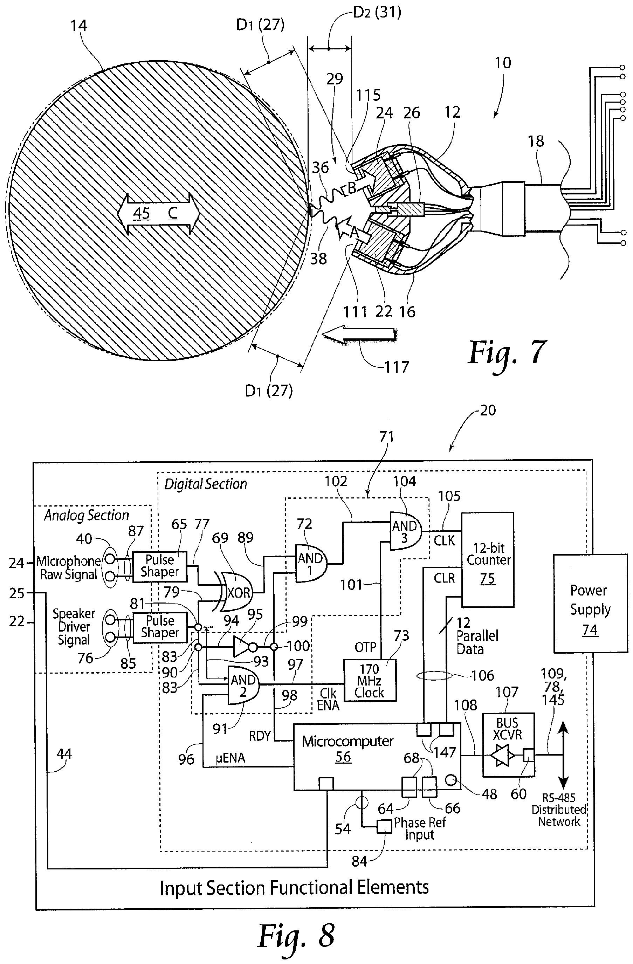

With attention now to the cross sectional view of Figure 5, the sensor 12 with the ultrasonic speaker 22 and ultrasonic microphone 24 are seen as preferably fitted into the housing 16. The housing is a molded housing 15. The housing 16 includes cradle openings 28 and foam isolation jackets 30 to attenuate the incident frequency conduction in the housing 16. An extension tube 18 channels component wiring 32 to an input circuit 20 (see Figure 8), as will be discussed. The extension tube 18 may be of any length necessary for the specific application, and is determined by the particular requirements of the housing 16 and test object, rotor, 14 (see Figure 6). As shown, the probe/input circuit assembly 10 uses a fixed alignment ultrasonic speaker 22 and ultrasonic microphone 24, each placed at a fixed distance D2 (31) (see Figure 6) from the test object 14.

As mentioned, the sensor 12 preferably includes a temperature and relative humidity sensor 26. The temperature and relative humidity sensor 26 detects and compensates for temperature and relative humidity in the volume of air 29 along the distance D1 (27), since the ambient temperature and relative humidity in the volume of air along the distance D1 (27) affects the speed of sound by up to 25% in the application (e.g. turbine monitoring) atmosphere. It is noted, the distance D1 (27) is a distance from at least one of an ultrasonic speaker face 111 and an ultrasonic microphone face 115. Wherein at least one of the ultrasonic speaker face 111 and the ultrasonic microphone face 115 is positioned at least one of towards the test object, rotor, 14 and in a test object direction 117 allowing for transmission of continuous ultrasonic acoustical carrier signal 38 from the ultrasonic speaker 22 and receipt of the reflected wave 36 by the ultrasonic speaker 24. Since detection is through timing, the measurements of temperature and relative humidity correct the timing counts of the probe/input circuit assembly 10. Further since detection is through timing only and the measurements of temperature and relative humidity correct the timing counts of the probe/input circuit assembly 10, calibration of the probe/input circuit assembly 10 as to the metallurgy is not required as in eddy current proximity probes.

As seen particularly in Figures 6 and 7, the ultrasonic microphone 24 of the probe/input circuit assembly 10 is preferably positioned in exact coincidence with the opposite direction of the reflected ultrasonic waves 36. As shown in Figure 6, a preferred position is a fixed 30 degree incidence and 30 degree reflection positioning of the ultrasonic speaker 22 and ultrasonic microphone 24. The probe 12 is further preferably positioned a predetermined distance D2 (31), from the target test object 14. As illustrated in Figure 7, the distance D2 (31) of the probe 12 to the test object 14, provides for the distance D1 (27) from the ultrasonic speaker 22 to test object 14 and the distance D1 (27) from ultrasonic microphone 24 to the test object 14. Preferably, distance D1 (27) equates to a distance from 2.22 cm up to an including 3.49 cm (7/8 of an inch up to and including 1 3/8 inches). Alternatively, the distance D1 (27) equates to less than 2.22 cm (7/8 of an inch) . Alternatively, the distance D1 (27) equates to more than 3.49 cm (1 3/8 inches). Further, the probe 12 targets a surface area (not illustrated in the figures) of the test object, rotor, 14 wherein the target surface area (not illustrated in the figures) of the test object is of a size (not illustrated in the figures) to minimize effects of anomalies on the test object surface 149. The probe 12 preferably targets a surface area (not illustrated in the figures) of the test object, rotor, 14 wherein the target surface area (not illustrated in the figures) of the test object is at least substantially a 2.54 cm (1-inch) diameter circle. Alternatively, the probe 12 preferably targets a surface area (not illustrated in the figures) of the test object, rotor, 14 wherein the target surface area (not illustrated in the figures) of the test object is less than a 2.54 cm (1- inch) diameter circle. Alternatively, the probe 12 preferably targets a surface area (not illustrated in the figures) of the test object, rotor, 14 wherein the target surface area (not illustrated in the figures) of the test object is greater than a 2.54 cm (1- inch) diameter circle. The minimization of the effect of the anomalies on the test object surface 149 results because the elastic properties of air smooth anomalies in the test object surface 149 within 6.35 mm (¼ - inch) of reflection.

In use, and as shown in Figure 7, the ultrasonic speaker 22 transmits a continuous ultrasonic acoustical carrier signal 38, an incidence wave 35, in a first preferred embodiment preferably a 25.000 kHz (+/-200 Hz) incidence wave frequency, toward the test object 14 in the direction A (39). The ultrasonic speaker 22 transmits a continuous ultrasonic acoustical carrier signal 38, an incidence wave 35, in a second preferred embodiment preferably a 40.000 kHz (+/- 200 Hz) incidence wave frequency, toward the test object 14 in the direction A (39). Alternatively, the ultrasonic speaker 22 transmits a continuous ultrasonic acoustical carrier signal 38, an incidence wave 35, in a incidence wave frequency range from 20.000 kHz (+/- 200 Hz) to 45.000 kHz (+/- 200 Hz), toward the test object 14 in the direction A (39). Prior art devices for measuring blood flow apply a high incidence wave frequency, in the range of 200.000 kHz A 200.000 kHz incidence wave frequency would cause the distance D1 (27) to be reduced in dimension such that an operator could not adjust the distance D1 (27) accurately. The ultrasonic speaker 22 transmits a continuous ultrasonic acoustical carrier signal 38, incidence wave 35. The continuous ultrasonic acoustical carrier signal 38, incidence wave 35, strikes the test object, rotor, 14. The incidence wave 35 is reflected off the test object, rotor, 14 and travels in the direction B (43) towards the ultrasonic microphone 24. The reflected wave 36 is received by the ultrasonic microphone 24.

As shown in Figures 7 and 8, the continuous ultrasonic acoustical carrier signal 38 is internally generated at an adjustable rate from an output capture pin 48 on the microcomputer 56. The carrier signal generated by the output capture pin 48 is converted to a sine wave by a pulse shaper circuit 50 before speaker output 76 transmission through the ultrasonic speaker 22. As previously mentioned, the probe/input circuit assembly 10, and the system 2 as a whole, uses in a first preferred embodiment the reflection of the continuous 25.000 KHz frequency (ultrasound) ultrasonic acoustical carrier signal 38, incidence wave 35, to detect immediate displacement, deflection C (45) of the test object, rotor, 14. As previously mentioned, the probe/input circuit assembly 10, and the system 2 as a whole, uses in a second preferred embodiment the reflection of the continuous 40.000 KHz frequency (ultrasound) ultrasonic acoustical carrier signal 38, incidence wave 35, to detect immediate displacement, deflection C (45) of the test object, rotor, 14. As previously mentioned, the probe/input circuit assembly 10, and the system 2 as a whole, uses in an alternative embodiment the reflection of the continuous ultrasonic acoustical carrier signal 38, incidence wave 35, in the range of 20.000 KHz to 45.000KHz frequency (ultrasound) to detect immediate displacement, deflection C (45) of the test object, rotor, 14. The transmitted continuous ultrasonic acoustical carrier signal 38, incidence wave 35, is reflected from the test object, rotor, 14 as reflected waves 36 in the direction B (43), and is detected by the ultrasonic microphone 24.

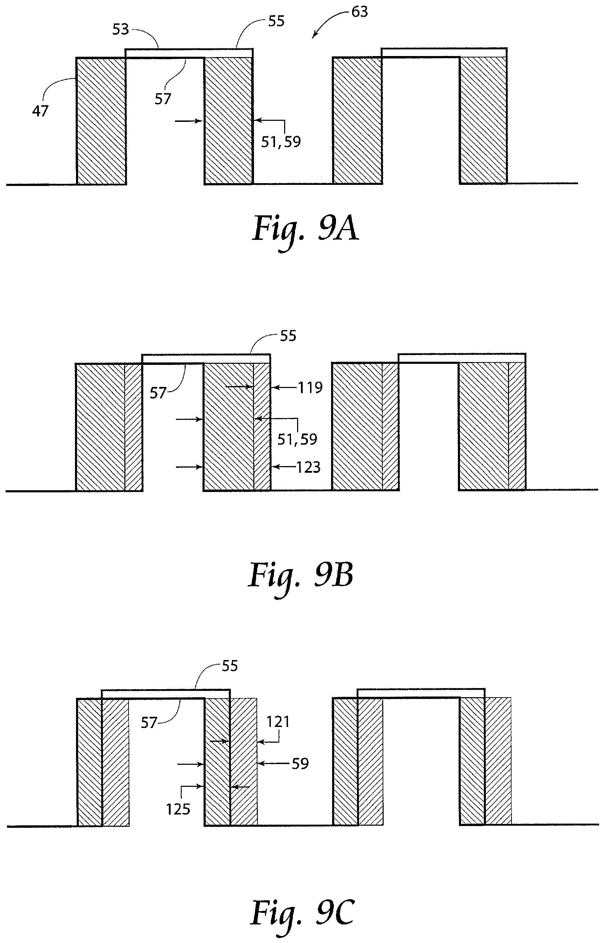

As shown in Figures 9A, 9B and 9C, at any fixed probe distance D2 (32) of the probe sensor 12 from the test object, rotor, 14, the reflected wave 36, received by the ultrasonic microphone 24, will have a reflected waveform 47 at a fixed phase offset 51 from the incidence waveform 53 of the continuous ultrasonic acoustical carrier signal 38, incidence wave 35. The phase offset 51 is the difference 59 between the pulsed time width of the incidence wave form 55, and the pulsed time width of the reflected wave form 57. An immediate displacement C (45) in the rotating test object, rotor, 14 due to rotor deflection will cause the difference 59 between the pulsed time width of the incidence wave form 55, and the pulsed time width of the reflected wave form 57 to increase and decrease. As illustrated in Figure 9A, where substantially minimal deflection in the test object, rotor, 14 exists at the probe sensor 12, a steady state phase offset 63 exists. As illustrated in Figure 9B, a deflection in the test object, rotor, 14 away from the probe sensor 12 will result in a waveform differential increase 119 in the difference 59 between the pulsed time width of the incidence wave form 55 and the pulsed time width of the reflected wave form 57 to a second difference 123. As illustrated in Figure 9C, a deflection in the test object, rotor, 14 towards the probe sensor 12 will result in a waveform differential decrease 121 in the difference 59 between the pulsed time width of the incidence wave form 55 and the pulsed time width of the reflected wave form 57 to a third difference 125.

As shown in Figure 8, an output signal from the ultrasonic microphone 24 is then transmitted to an input circuit 20 by way of wiring 32 or other conventional means through microphone input 40. The input circuit 20 is powered by power supply 74. A microcomputer 56 receives temperature and humidity input corrections 25 via a Serial Peripheral Interface link 44 and digitally, within its code, applies the input corrections 25. This retains the system 2 (see figure 7) in acceptable calibration at all times, by self-calibration. Due to the application of a digital system noise issues are minimized. Mechanical acoustical isolation, such as the jackets 30 shown (see figure 5), are present to reduce any system noise. In regards to self-calibration, any changes in the distance D1 (27) affect only the steady state phase offset 63. Further, the changes are subtracted in real time analysis from the actual deflection of the test object, rotor, 14.

Measurements counts from the microphone input 40 are sent to the input circuit 20. The input circuit 20 comprises the speaker pulse shaper 50, a microphone pulse shaper 65, an XOR gate 69, a second grouping of digital gates 71, a clock generator 73, a counter 75, and a microcomputer 56. The combination of the speaker pulse shaper 50, the microphone pulse shaper 65, the XOR gate 69, the second grouping of digital gates 71, the clock generator 73, and the counter 75 produce a sequence of immediate differential pulse width measurement counts. The pulse width measurement counts are proportional to the instantaneous distance D1 (27) to the test object, rotor, 14. Preferably, the pulse width measurement counts are proportional to the instantaneous distance D1 (27) to the rotor with an accuracy of at least +/- 2.54×10⁻³ mm (+/- 0.0001 inch) (+/- 2.54×10⁻³ mm (+/- 0.0001 inch) and greater accuracy than +/- 2.54×10⁻³ mm (+/- 0.0001 inch)). Alternatively, the pulse width measurement counts may be proportional to the instantaneous distance D1 (27) to the rotor with an accuracy of less than +/- 2.54×10⁻³ mm (+/- 0.0001 inch).

The speaker output 76 is electrically connected to the speaker pulse shaper 50 via a speaker output/speaker pulse shaper connection 85. The speaker pulse shaper 50 is electrically connected to the XOR gate 69 through a speaker pulse shaper/XOR gate connection 79. The microphone input 40 is electrically connected to the microphone pulse shaper 65 through the microphone input/microphone pule shaper connection 87. The microphone pulse shaper 65 is electrically connected to the XOR gate 69 through a microphone pulse shaper/XOR gate connection 77. The microphone pulse shaper/XOR gate connection and the speaker pulse shaper/XOR gate connection 79 provide the two inputs required for the XOR gate 69. An XOR gate/logic gate connection 89 electrically connects the XOR gate 69 to an AND1 gate 72 of the second grouping of digital gates 71. The XOR gate/logic gate connection 89 is an output for the XOR gate and a subsequent input for the AND1 gate 72. Wherein the XOR output is combined with a microcomputer port control. Speaker pulse shaper/XOR gate connection 79 is in electrical communication with a first intermediate connection 83 at a first connection junction 81. The first junction 81 and an AND2 gate 91 are in electrical connection through the first intermediate connection 83. At a second connection junction 90, along a first intermediate connection length 93 of the first intermediate connection 83, a first NOT gate connection 94 electrically connects the first intermediate connection 83 and a NOT gate 95. The AND2 gate 91 and the microcomputer 56 are electrically connected through the AND2 gate/microcomputer connection 96. The AND2 gate/microcomputer connection 96 and the first intermediate connection 83 provide the input connections to the AND2 gate 91.

The AND2 gate 91 and the clock generator 73 are electrically connected through the AND2 gate/clock generator connection 97. The AND2 gate/clock generator connection 97 provides for the output from the AND2 gate 91 and an input to the clock generator 73 to enable the clock generator 73.

A microcomputer/AND1 gate connection 98 provides electrical communication between the microcomputer 56 and the AND1 gate 72. A second NOT gate connection 99 provides for electrical communication between the NOT gate 95 and the AND2 gate/clock generator connection 97, wherein the second NOT gate connection 99 provides for an output from the NOT gate 95. The second NOT gate connection 99 contacts the microcomputer/AND1 gate connection 98 at a third connection junction 100. The microcomputer/AND1 gate connection 98 and the XOR gate/logic gate connection 89 provide the input connections to the AND1 gate 72.

The AND1 gate 72 is in electrical communication with an AND3 gate 104 through an AND1 gate/AND3 gate connection 102. The clock generator 73 is in electrical communication with the AND3 gate 104 through a clock generator/AND3 gate connection 101. The AND1 gate/AND3 gate connection 102 and the clock generator/AND3 gate connection 101 provide the inputs into the AND3 gate 104. Wherein the XOR output is combined with a high speed clock signal from the clock generator 73. The high speed clock signal is preferably at least substantially 170 MHz. Alternatively, the high speed clock signal may be less than substantially 170 MHz. Alternatively, the high speed clock signal may be more than substantially 170 MHz. The AND3 gate 104 is in electrical communication with the counter 75 through an AND3 gate/counter connection 105. The AND3 gate/counter connection 105 provides for an output from the AND3 gate and an input into the counter 75. The counter 75 is preferably a 12-bit counter (4096 count). Alternatively, the counter 75 may be greater than a 12-bit counter. Alternatively, the counter 75 may be less than a 12-bit counter. The counter 75 measures the pulse width of the differences in the real time waveform of the incidence waveform 53 and the reflected waveform 47. The counter 75 and the microcomputer 56 are in electrical connection the counter/microcomputer connection 106. Where the counter/microcomputer connection 106 provides for transfer of counting displacement date to the microcomputer 56. The counter/microcomputer connection 106 connect to microcomputer input ports 147 for parallel data reads. Internal timing features of the microcomputer adjust a counter sampling rate to each one-degree of shaft turn. Over sampling of five test object, rotor, 14 turns is performed and stored in a memory. The oversampling data is corrected to a bipolar signal by subtracting the DC component from the difference 59.

It is observed alternative embodiments of the second grouping of digital gates 71 may comprise at least one of an AND gate, an OR gate, a NAND gate, a NOR gate, an XOR gate, a XNOR gate, and a NOT gate to perform the at least one function of the second grouping of digital gates 71 as described in this application.

Firmware located in the microcomputer 56 performs deflection analysis. The firmware operates on the bipolar deflection signal using a demodulation technique to resolve a data set of the running speed frequency (Hz), (1X) peak-to-peak deflection amplitude and phase, the half running speed frequency (1/2X) peak-to-peak deflection amplitude, the twice running speed frequency (2X) peak-to-peak deflection amplitude. The microcomputer 56 uses a buffered, zero-phase pulse 54 transmitted from zero phase probe 84 as a once-per-shaft revolution timing signal reference to generate time-dependent vibration analysis data.

As illustrated in Figures 8 and 10, the microcomputer 56 is in electrical connection with a bus 107 through a microcomputer/bus communication 108. Wherein deflection data is communicated to the bus 107 from the microcomputer 56. The bus 107, and in turn the input circuit 20, is in electrical communication with a communication interface module 140 of the Host Data Manager 110 through a serial digital interface network 109. The communication interface module 140 of the Host Data Manager 110 is in electrical communication with a touch screen PC, industrial computer, 70 of the Host Data Manager 110 through a communications interface module/touch screen PC communication 143.

Upon query from the Host Data Manager 110, any or all of this deflection data is delivered via the serial digital network 109 to the Host Data Manager 110. The serial communications network 109 comprises at least one serial communications port 60 in communication with an RS-485 connection 78, wherein each at least one serial communications port 60 is in electrical communication with the RS-485 connection 78 through a connection extension 145, wherein the extension connection 145 is a continuation of the RS-485 connection 78. The at least one serial communications port 60 is buffered with a transceiver chip. The serial communications port 60 is in electrical communication with the bus 107. Wherein the serial communications port 60 receives queries from the Host Data manager 110 and transmits the deflection analysis requested to the Host Data Manager 110 by way of at least one of the connection extension 145 and the RS-485 connection 78. The Host Data Manager 110 automatically polls the deflection data from each probe sensor 20 in less than 0.0417 seconds, and stacks the deflection data from multiple probe sensors 20 into one message that is provided to the touch screen PC, industrial computer, 70 at a rate of once per second. The touch screen PC, industrial computer, 70 is equipped with software to provide graphical data displays, diagnostics, and alarms. The data sets from all probes are combined by the communication interface module 140 and sent to the touch screen PC, industrial computer, 70.

As best shown in Figure 10, multiple probe/input circuit assemblies 10, the probe sensor 12 and the input circuit 20, can be used together in a network to provide vibration analysis at a variety of locations along a large test object, rotor, 14, such as a large tandem compound turbine-generator. Zero-phase probe 84 provides a timing reference for deflection analysis performed by the input circuit 20. The wiring connection between the probe sensor 12 and input circuit 20 is preferably protected by flexible, armored cable 82 to provide strain relief and adjustable probe sensor 12 placement. Each probe sensor 12 and input circuit 20 of each probe/input circuit assembly 10 is paired with a redundant assembly 112. Wherein there is a primary assembly 116 and a redundant assembly 112 in a paired assembly 114. There is at least one paired assemblies 114 measuring the test object, rotor, 14. It is noted the primary assembly 116 and the redundant assembly 112 of the paired assemblies 114 are located substantially at the same location along a test object length 118, and positioned at a different radial location about a circumference 120 of the test object, rotor, 14. Wherein the primary assembly 116 is located at a first radial location 122 about the circumference 120 and the redundant assembly 112 is located at a second radial location 124 about the circumference 120. It is noted the components of the primary assembly 116 and the redundant assembly 112 incorporate the elements as described in the probe/input circuit assembly 10, which include the probe sensor 12, input circuit 20, and elements of the probe sensor 12 and elements of the input circuit 20.

The input circuit 20 of at least one of the primary assembly 116 and the redundant assembly 112 of each paired assemblies 114 communicates with communication interface module 140 of the Host Data Manager 110 via the RS-485 connection 78. The communication interface module 140 of the Data Host manager 110 requests and reads polling data much faster than a typical computer USB port. So the use of the communication interface module 140, which stacks all data into one, once per second message, as an intermediary between the input circuits 20 and the touch screen PC, industrial computer, 70, allows up to 32 probes to be used in a single network. Communication interface modules 140 may be employed to raise probe counts of a system in quantities of thirty-two each. The high volume of probe sensors and deflection data gives the user an incredibly accurate sampling of deflection phenomena.

In the event that at least one of the probe 20 and microcomputer 56 of the primary assembly 116 fails to respond to the Host Data Manager 110 polling data query or receives a failure notice from the microcomputer 56, the redundant assembly 112 of the paired assemblies 114 is polled by the Data Host Manager 110 for deflection data. This eliminates loss of function for a single probe or analyzer failure.

As illustrated in Figure 10, the probe sensors 12 of the primary assembly 116 and the redundant assembly 112 are rigidly mounted and located along the test object length 118 in order to maximize model deflection. Thus the probe sensors 12 of the primary assembly 116 and the redundant assembly 112 are distant from the support bearings 153 along the test object length 118.

As illustrated in Figures 10, 11, 12 and 13, the deflection data gathered by the communication interface module 140 of the Host Data Manager 110 is sent to the touch screen PC, industrial computer, 70 through the communications interface module/touch screen PC communication 143. The touch screen PC, industrial computer, 70 performs a modal analysis for each test object, rotor, 14 using the deflection data sets of the test object, rotor, 14. Each rotor end pair of probe data (or redundant spares) is used for the rotor deflection analysis.

As illustrated in Figure 11, the modal analysis proceeds as follows. The running speed amplitude and phase vectors (combined as 126) from the primary assembly 116 and redundant assembly 112 of each paired assembly 114 are summed to yield the Static Resultant 128. The original running speed amplitude and phase vectors (combined as 126) have one-half of the Static Resultant 128 magnitudes subtracted, opposite a Static Resultant phase 133, from running speed amplitude and phase vectors (combined as 126) to establish dynamic resultants, DR1 and DR2, 132.

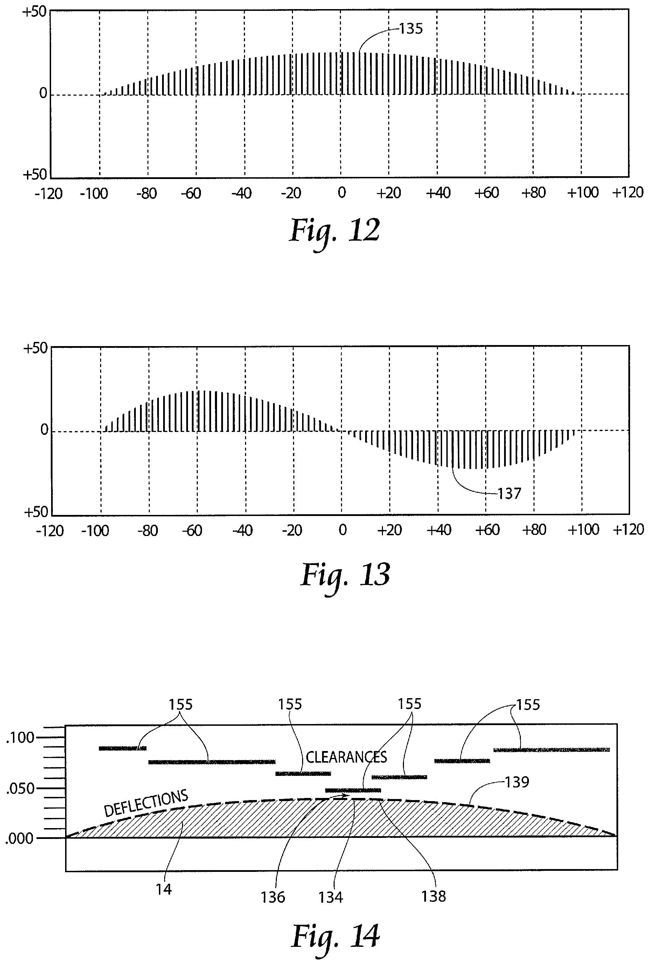

The Static Resultant 128 identifies a 1^{st} Mode Magnitude and Phase 127 at the probe sensor 12 finite elements (not illustrated in the figures). A 1st Mode full rotor span deflection is calculated using extrapolation of the rotor end probe sensor 12 longitudinal locations 134 along the test object length 118 and amplitudes to a full set of 100 finite elements between the rotor support bearing 153 centerlines utilizing a 1st Mode deflection curve 135 established based upon the particular rotor bearing span and stiffness. The curve is a 3rd-order polynomial. Figure 12 illustrates a typical 1st Mode plot.

The Dynamic Resultants 132 identify a 2^{nd} Mode Magnitude and Phase 129 at the probe sensor 12 finite elements (not illustrated in the figures). A 2^{nd} Mode full rotor span deflection is calculated using extrapolation of the rotor end probe sensor 12 longitudinal locations 134 along the test object length 118 and amplitudes to a full set of 100 finite elements between the rotor support bearing 153 centerlines utilizing a 2nd Mode deflection curve 137 established based upon the particular rotor bearing span and stiffness. The curve is also a 3rd-order polynomial. Figure 13 illustrates a typical 2nd Mode plot.

A combined 1st Mode and 2nd Mode rotor deflection curve 139 (see Figure 14) is calculated by one-half the vector sum of the 1st Mode deflection curve 135 and the 2nd Mode deflection curve 137 at each of the 100 finite elements.

A seal clearance array of values at the same finite element rotor end probe sensor 12 longitudinal locations 134 along the test object length 118 used for the deflection curve generation is pre-assigned to touch screen PC, industrial computer, 70 memory. The source of the seal clearance array of values is the seal clearances measured at a last turbine overhaul inspection.

Due to the 0.0025 mm (.0001 inch) vector accuracy of the deflection data, the system may also calculate optimum balance weight installations in test objects, rotors, 14 to minimize operation test object, rotor, 14 deflection.

As previously noted, the touch screen PC, industrial computer, 70 computes 1^{st}, as illustrated by the 1st Mode deflection curve 135, and 2^{nd} modal deflection phases and magnitudes, as illustrated by the 2nd Mode deflection curve 137, of the test objects, rotors, 14. The touch screen PC, industrial computer, 70 further computes the 1^{st} and 2^{nd} modal deflection over a set of finite elements over the test object length 128 between support bearings 153, as illustrated by the combined 1st Mode and 2nd Mode rotor deflection curve 139.

As illustrated in Figure 14, the touch screen PC, industrial computer, 70 compares the combined 1^{st} and 2^{nd} modal element set of combined deflections, as illustrated by the combined 1st Mode and 2nd Mode rotor deflection curve 139, to internal seal clearances of the test objects, rotors, 14 at the longitudinal locations 134 of the finite elements, and provides warning to operators when the deflection is impeding contact with the turbine seals of the test object, rotor, 14 at the 100 finite element longitudinal locations along the test object length 128. If the deflection 138 has consumed 75% of the clearance distance 136 to a clearance limit value 155 at any elements an advisory alarm is generated to caution operators. A second notice is produced if the deflection 138 has consumed 90% of the clearance distance 136 the clearance limit value 155 at any elements. Specifically, the system 2 provides warnings to minimize test object, rotor, 14 contact with stationary seals and rotating seal contact with stationary lands.

As illustrated in Figure 10, the touch screen PC, industrial computer, 70 outputs a condensed serial data stream for each probe/input circuit assembly 10 to the Communications Interface Module 140 of the Host Data Manager 110 which maintains a data update with a plant computer or Distributed Control System (DCS) 88 through a Plant computer/Data host manager interface 80 to inform operators. Notices, as described, are displayed on the touch screen PC, industrial computer, 70 and are used by operators to avoid a continuing startup of the turbines through the rotor critical speeds which maximize rotor deflection, by slow rolling the test object, rotors, 14 to reduce deflection.

The microcomputer 56 also generates diagnostic data such as probe signal loss, carrier frequency loss, and demodulator power loss. Said diagnostic data is sent to the Data Host manager 110 prior to any deflection data to prevent the Data Host Manager 110 from interpreting these events as deflection phenomena in the industrial machine being monitored. This prevents false emergency shutdowns of the monitored machine. Said diagnostic data is delivered via the same serial digital network 109 as said deflection data. By utilizing a polled digital serial data stream, the present system prevents the possibility of introducing transmission noise prior to deflection analysis.

As shown in Figure 8, further configuration can be performed by manually toggling a pair of eight-position Dual in-line Package (DIP) switches 64 and 66 which connect to two eight-bit microcomputer ports 68. DIP switches 64 and 66 provide direct manual configuration of the microcomputer 56 by the user. DIP switch 64 provides manual assignment of the engineering units desired for the deflection data output and also provides manual assignment of the direction of shaft rotation. The second DIP switch 66 provides manual input of the serial network drop code and transceiver drop code.

An intended benefit of the present invention is a monitoring system testing rotor deflection to ensure the turbine rotor contact with stationary seals is minimized and rotating seal contact with stationary lands is minimized.

An intended benefit of the present invention is a monitoring system testing rotor deflection which measures a large area of the test object minimizing the effect of surface anomalies.

An intended benefit of the present invention is a monitoring system testing rotor deflection system having a design which minimizes thermal noise levels.

An intended benefit of the present invention is a monitoring system testing rotor deflection system which is self-calibrating.

The foregoing is considered as illustrative only of the principles of the invention. Furthermore, since numerous modifications and changes will readily occur to those skilled in the art, it is not desired to limit the invention to the exact construction and operation shown and described. While the preferred embodiment has been described, the details may be changed as long as they don't depart from the invention, which is defined by the claims.

## Claims

1. A system (2) for measuring rotor deflection of a rotor shaft (14) including:
a first probe sensor (12) configured to measure rotor deflection of said rotor shaft and a data manager (110),
said first probe sensor having an ultrasonic speaker (22) positioned in a first opening (28) for providing an incident sound wave (55) having a pulse width, and an ultrasonic microphone (24) positioned in a second opening (28) for receiving a reflected sound wave (57) having a pulse width;
a first digital circuit (20) configured to measure rotor deflection data;
wherein:
(i) said first probe sensor is in communication with said first digital circuit;
(ii) said first digital circuit (20) comprises a speaker pulse shaper (50) and a microcomputer (56); and
(iii) said first digital circuit is in communication with said data manager,
**characterized in that** said first digital circuit (20 further comprises a microphone pulse shaper (65), an XOR gate (69), a second grouping of digital gates (71), a clock generator (73), a counter (75), wherein said first digital circuit is configured to produce a sequence of immediate differential pulse width measurement counts which are proportional to the instantaneous distance (D1) to the rotor shaft (14) which the microcomputer uses to perform a deflection analysis and determine rotor deflection of said rotor shaft, and wherein said first digital circuit is configured to communicate said deflection analysis to said data manager.

2. The system of claim 1, wherein said first probe sensor (12) further includes a temperature and humidity sensor (26), wherein said temperature and humidity sensor provides temperature and humidity input corrections (25) thar are used for self-calibration of the system.

3. The system of claim 1 or 2, wherein said system is a digital system.

4. The system of any one of claims 1 to 3, wherein the ultrasonic speaker (22) is configured to provide an incident sound wave (55) having at least one of (i) at least substantially a 25 kHz frequency and (ii) at least substantially a 40 kHz frequency.

5. The system of claim 4, wherein the ultrasonic speaker (22) is configured to provide an incident sound wave (55) having a frequency range from 25 kHz to 40 kHz.

6. The system of any one of claims 1 to 5, wherein said first digital circuit (20) is further configured to perform probe health diagnostics and generate probe health diagnostics data.

7. The system of claim 6, wherein said first digital circuit (20) is configured to transmit said rotor deflection data and probe health diagnostics data via a serial digital network.

8. The system of claim 7, wherein said data manager (110) is configured to poll said rotor deflection data and said probe health diagnostics data.

9. The system of any one of claims 1 to 7, wherein said data manager (110) is configured to poll said rotor deflection data.

10. The system of any one of claims 1 to 9, wherein said data manager (110) is configured to perform a modal analysis.

11. The system of any one of claims 1 to 10, said system (2) having a zero-phase pulse.

12. A method for measuring a rotor deflection of a rotor shaft (14) including:
providing a first probe sensor (12) having an ultrasonic speaker (22) housed within a first probe sensor first opening, an ultrasonic microphone (24) housed within a first probe sensor second opening for measuring a rotor deflection of said rotor shaft and a data manager;
transmitting an ultrasonic signal from the ultrasonic speaker;
reflecting said ultrasonic signal from said rotor shaft as a reflected ultrasonic signal to the ultrasonic microphone;
providing a first digital circuit (20) for measuring rotor deflection data, said first digital circuit comprising a speaker pulse shaper (50), a microphone pulse shaper (65), an XOR gate (69), a second grouping of digital gates (71), a clock generator (73), a counter (75) and a microcomputer (56) which together are operable to produce a sequence of immediate differential pulse width measurement counts which are proportional to the instantaneous distance (D1) to the rotor shaft (14) which the microcomputer uses to perform a deflection analysis and determine rotor deflection of said rotor shaft;
transmitting said reflected signal to the first digital circuit;
performing said deflection analysis using said first digital circuit; and
transmitting said deflection analysis to a data manager (110).

13. The method of claim 12 further including applying corrections from a temperature and humidity sensor (26) to said reflected ultrasonic signal and performing self-calibration of the system.

14. The method of claim 12 or 13 further including said first digital circuit (20) performing probe health diagnostics and generating probe health diagnostics data, which comprise said deflection analysis.

15. The method of claim 14, wherein said first digital circuit (20) transmits rotor deflection data and probe health diagnostics data via a serial digital network.

16. The method of claim 15 further including said data manager (110) polling said rotor deflection data and said probe health diagnostics data.

17. The method of claim 12 or 13 further including said data manager (110) polling said deflection analysis.

18. The method of any one of claims 12 to 17 further including said data manager (110) performing a modal analysis.

19. The method of claim 18 further including comparing first and second modal deflections.

20. The method of any one of claims 12 to 19 further including producing warnings for said rotor shaft proximity with at least one of stationary lands and stationary seals.

## Patentansprüche

1. System (2) zur Messung der Rotorauslenkung einer Rotorwelle (14), umfassend:
einen ersten Sondensensor (12), der so konfiguriert ist, dass er die Rotorauslenkung der Rotorwelle misst, und einen Datenmanager (110),
wobei der erste Sondensensor einen Ultraschalllautsprecher (22), der in einer ersten Öffnung (28) positioniert ist, um eine einfallende Schallwelle (55) mit einer Impulsbreite bereitzustellen, und ein Ultraschallmikrofon (24) aufweist, das in einer zweiten Öffnung (28) positioniert ist, um eine reflektierte Schallwelle (57) mit einer Impulsbreite zu empfangen;
eine erste digitale Schaltung (20), die zum Messen von Rotorauslenkungsdaten konfiguriert ist;
wobei:
(i) der erste Sondensensor in Verbindung mit der ersten digitalen Schaltung steht;
(ii) die erste digitale Schaltung (20) einen Lautsprecherimpulsformer (50) und einen Mikrocomputer (56) umfasst; und
(iii) die erste digitale Schaltung in Kommunikation mit dem Datenmanager steht,
**dadurch gekennzeichnet, dass** die erste digitale Schaltung (20) ferner einen Mikrofonimpulsformer (65), ein XOR-Gatter (69), eine zweite Gruppe digitaler Gatter (71), einen Taktgenerator (73) und einen Zähler (75) umfasst, wobei die erste digitale Schaltung so konfiguriert ist, dass sie eine Folge von unmittelbaren Differenzimpulsbreitenmesszählungen erzeugt, die proportional zum momentanen Abstand (D1) zur Rotorwelle (14) sind, den der Mikrocomputer verwendet, um eine Auslenkungsanalyse durchzuführen und die Rotorauslenkung der Rotorwelle zu bestimmen, und wobei die erste digitale Schaltung so konfiguriert ist, dass sie die Ablenkungsanalyse an den Datenmanager übermittelt.

2. System nach Anspruch 1, wobei der erste Sondensensor (12) ferner einen Temperatur- und Feuchtigkeitssensor (26) umfasst, wobei der Temperatur- und Feuchtigkeitssensor Temperatur- und Feuchtigkeitseingangskorrekturen (25) bereitstellt, die zur Selbstkalibrierung des Systems verwendet werden.

3. System nach Anspruch 1 oder 2, wobei das System ein digitales System ist.

4. System nach einem der Ansprüche 1 bis 3, wobei der Ultraschalllautsprecher (22) so konfiguriert ist, dass er eine einfallende Schallwelle (55) mit mindestens einer von (i) zumindest im Wesentlichen einer 25-kHz-Frequenz und (ii) zumindest im Wesentlichen einer 40-kHz-Frequenz bereitstellt.

5. System nach Anspruch 4, wobei der Ultraschalllautsprecher (22) so konfiguriert ist, dass er eine einfallende Schallwelle (55) mit einem Frequenzbereich von 25 kHz bis 40 kHz bereitstellt.

6. System nach einem der Ansprüche 1 bis 5, wobei die erste digitale Schaltung (20) ferner dazu konfiguriert ist, Sondenzustandsdiagnosen durchzuführen und Sondenzustandsdiagnosedaten zu erzeugen.

7. System nach Anspruch 6, wobei die erste digitale Schaltung (20) so konfiguriert ist, dass sie die Rotorauslenkungsdaten und Sondenzustandsdiagnosedaten über ein serielles digitales Netzwerk überträgt.

8. System nach Anspruch 7, wobei der Datenmanager (110) so konfiguriert ist, dass er die Rotorauslenkungsdaten und die Sondenzustandsdiagnosedaten abfragt.

9. System nach einem der Ansprüche 1 bis 7, wobei der Datenmanager (110) so konfiguriert ist, dass er die Rotorauslenkungsdaten abfragt.

10. System nach einem der Ansprüche 1 bis 9, wobei der Datenmanager (110) so konfiguriert ist, dass er eine Modalanalyse durchführt.

11. System nach einem der Ansprüche 1 bis 10, wobei das System (2) einen Nullphasenimpuls aufweist.

12. Verfahren zum Messen einer Rotorauslenkung einer Rotorwelle (14), umfassend:
Bereitstellen eines ersten Sondensensors (12) mit einem Ultraschalllautsprecher (22), der in einer ersten Öffnung des ersten Sondensensors untergebracht ist, einem Ultraschallmikrofon (24), das in einer zweiten Öffnung des ersten Sondensensors untergebracht ist, zum Messen einer Rotorauslenkung der Rotorwelle und eines Datenmanagers;
Übertragen eines Ultraschallsignals vom Ultraschalllautsprecher;
Reflektieren des Ultraschallsignals von der Rotorwelle als reflektiertes Ultraschallsignal zum Ultraschallmikrofon;
Bereitstellen einer ersten digitalen Schaltung (20) zum Messen von Rotorauslenkungsdaten, wobei die erste digitale Schaltung einen Lautsprecherimpulsformer (50), einen Mikrofonimpulsformer (65), ein XOR-Gatter (69), eine zweite Gruppe digitaler Gatter (71), einen Taktgenerator (73) und einen Zähler (75) und einen Mikrocomputer (56) umfasst, die zusammen betreibbar sind, um eine Folge unmittelbarer Differenzimpulsbreitenmesszählungen zu erzeugen, die proportional zum momentanen Abstand (D1) zur Rotorwelle (14) sind, die der Mikrocomputer verwendet, um eine Auslenkungsanalyse durchzuführen und die Rotorauslenkung der Rotorwelle zu bestimmen;
Übertragen des reflektierten Signals an die erste digitale Schaltung;
Durchführen der Ablenkungsanalyse unter Verwendung der ersten digitalen Schaltung; und
Übertragen der Ablenkungsanalyse an einen Datenmanager (110) .

13. Verfahren nach Anspruch 12, ferner umfassend das Anwenden von Korrekturen von einem Temperatur- und Feuchtigkeitssensor (26) auf das reflektierte Ultraschallsignal und das Durchführen einer Selbstkalibrierung des Systems.

14. Verfahren nach Anspruch 12 oder 13, ferner umfassend, dass die erste digitale Schaltung (20) Sondengesundheitsdiagnosen durchführt und Sondengesundheitsdiagnosedaten erzeugt, die die Ablenkungsanalyse umfassen.

15. Verfahren nach Anspruch 14, wobei die erste digitale Schaltung (20) Rotorauslenkungsdaten und Sondenzustandsdiagnosedaten über ein serielles digitales Netzwerk überträgt.

16. Verfahren nach Anspruch 15, ferner umfassend, dass der Datenmanager (110) ferner die Rotorauslenkungsdaten und die Sondengesundheitsdiagnosedaten abfragt.

17. Verfahren nach Anspruch 12 oder 13, ferner umfassend, dass der Datenmanager (110) die Ablenkungsanalyse abfragt.

18. Verfahren nach einem der Ansprüche 12 bis 17, ferner umfassend, dass der Datenmanager (110) eine Modalanalyse durchführt.

19. Verfahren nach Anspruch 18, ferner umfassend das Vergleichen erster und zweiter modaler Ablenkungen.

20. Verfahren nach einem der Ansprüche 12 bis 19, ferner umfassend das Erzeugen von Warnungen für die Nähe der Rotorwelle zu stationären Stegen und/oder stationären Dichtungen umfasst.

## Revendications

1. Système (2) de mesure de la déflexion de rotor d'un arbre de rotor (14) comportant :
un premier capteur de sonde (12) configuré pour mesurer une déflexion de rotor dudit arbre de rotor et un gestionnaire de données (110),
ledit premier capteur de sonde ayant un haut-parleur ultrasonore (22) positionné dans une première ouverture (28) pour la fourniture d'une onde sonore incidente (55) ayant une largeur d'impulsion, et un microphone ultrasonore (24) positionné dans une seconde ouverture (28) pour la réception d'une onde sonore réfléchie (57) ayant une largeur d'impulsion ;
un premier circuit numérique (20) configuré pour mesurer des données de déflexion de rotor ;
dans lequel :
(i) ledit premier capteur de sonde est en communication avec ledit premier circuit numérique ;
(ii) ledit premier circuit numérique (20) comprend un dispositif de mise en forme d'impulsions de haut-parleur (50) et un micro-ordinateur (56) ; et
(iii) ledit premier circuit numérique est en communication avec ledit gestionnaire de données,
**caractérisé en ce que** ledit premier circuit numérique (20) comprend en outre un dispositif de mise en forme d'impulsions de microphone (65), une porte XOR (69), un second groupe de portes numériques (71), un générateur d'horloge (73), un compteur (75), dans lequel ledit premier circuit numérique est configuré pour produire une séquence de comptes de mesure de largeur d'impulsion différentielle immédiate qui sont proportionnels à la distance instantanée (Dl) à l'arbre de rotor (14) que le micro-ordinateur utilise pour effectuer une analyse de déflexion et déterminer la déflexion du rotor dudit arbre de rotor, et dans lequel ledit premier circuit numérique est configuré pour communiquer ladite analyse de déflexion audit gestionnaire de données.

2. Système selon la revendication 1, dans lequel ledit premier capteur de sonde (12) comporte en outre un capteur de température et d'humidité (26), dans lequel ledit capteur de température et d'humidité fournit des corrections d'entrée de température et d'humidité (25) qui sont utilisées pour l'auto-étalonnage du système.

3. Système selon la revendication 1 ou 2, dans lequel ledit système est un système numérique.

4. Système selon l'une quelconque des revendications 1 à 3, dans lequel le haut-parleur ultrasonore (22) est configuré pour fournir une onde sonore incidente (55) ayant au moins l'un parmi (i) au moins sensiblement une fréquence de 25 kHz et (ii) au moins sensiblement une fréquence de 40 kHz.

5. Système selon la revendication 4, dans lequel le haut-parleur ultrasonore (22) est configuré pour fournir une onde sonore incidente (55) ayant une plage de fréquences de 25 kHz à 40 kHz.

6. Système selon l'une quelconque des revendications 1 à 5, dans lequel ledit premier circuit numérique (20) est en outre configuré pour effectuer des diagnostics d'état de sonde et générer des données de diagnostic d'état de sonde.

7. Système selon la revendication 6, dans lequel ledit premier circuit numérique (20) est configuré pour transmettre lesdites données de déflexion de rotor et les données de diagnostic d'état de sonde via un réseau numérique série.

8. Système selon la revendication 7, dans lequel ledit gestionnaire de données (110) est configuré pour regrouper lesdites données de déflexion de rotor et lesdites données de diagnostic d'état de sonde.

9. Système selon l'une quelconque des revendications 1 à 7, dans lequel ledit gestionnaire de données (110) est configuré pour regrouper lesdites données de déflexion de rotor.

10. Système selon l'une quelconque des revendications 1 à 9, dans lequel ledit gestionnaire de données (110) est configuré pour effectuer une analyse modale.

11. Système selon l'une quelconque des revendications 1 à 10, ledit système (2) ayant une impulsion de phase zéro.

12. Procédé de mesure d'une déflexion de rotor d'un arbre de rotor (14), comportant :
la fourniture d'un premier capteur de sonde (12) ayant un haut-parleur ultrasonore (22) logé dans une première ouverture du premier capteur de sonde, un microphone ultrasonore (24) logé dans une seconde ouverture du premier capteur de sonde pour la mesure d'une déflexion de rotor dudit arbre de rotor et un gestionnaire de données ;
la transmission d'un signal ultrasonore à partir du haut-parleur ultrasonore ;
la réflexion dudit signal ultrasonore provenant dudit arbre de rotor sous la forme d'un signal ultrasonore réfléchi vers le microphone ultrasonore ;
la fourniture d'un premier circuit numérique (20) pour la mesure de données de déflexion de rotor, ledit premier circuit numérique comprenant un dispositif de mise en forme d'impulsions de haut-parleur (50), un dispositif de mise en forme d'impulsions de microphone (65), une porte XOR (69), un second groupe de portes numériques (71), un générateur d'horloge (73), un compteur (75) et un micro-ordinateur (56) qui, ensemble, peuvent fonctionner pour produire une séquence de mesures immédiates de largeur d'impulsion différentielle qui sont proportionnelles à la distance instantanée (Dl) jusqu'à l'arbre de rotor (14) que le micro-ordinateur utilise pour effectuer une analyse de déflexion et déterminer la déflexion de rotor dudit arbre de rotor ;
la transmission dudit signal réfléchi au premier circuit numérique ;
l'exécution de ladite analyse de déflexion en utilisant ledit premier circuit numérique ; et
la transmission de ladite analyse de déflexion à un gestionnaire de données (110).

13. Procédé selon la revendication 12, comportant en outre l'application de corrections provenant d'un capteur de température et d'humidité (26) audit signal ultrasonore réfléchi et l'exécution d'un auto-étalonnage du système.

14. Procédé selon la revendication 12 ou 13, comportant en outre ledit premier circuit numérique (20) effectuant des diagnostics d'état de sonde et générant des données de diagnostic d'état de sonde, qui comprennent ladite analyse de déflexion.

15. Procédé selon la revendication 14, dans lequel ledit premier circuit numérique (20) transmet des données de déflexion de rotor et des données de diagnostic d'état de sonde via un réseau numérique série.

16. Procédé selon la revendication 15, comportant en outre ledit gestionnaire de données (110) regroupant lesdites données de déflexion de rotor et lesdites données de diagnostic d'état de sonde.

17. Procédé selon la revendication 12 ou 13, comportant en outre ledit gestionnaire de données (110) regroupant ladite analyse de déflexion.

18. Procédé selon l'une quelconque des revendications 12 à 17, comportant en outre ledit gestionnaire de données (110) effectuant une analyse modale.

19. Procédé selon la revendication 18, comprenant en outre la comparaison des première et seconde déflexions modales.

20. Procédé selon l'une quelconque des revendications 12 à 19, comportant en outre la production d'avertissements pour ladite proximité de l'arbre de rotor avec au moins l'un des plages fixes et des joints fixes.
